# EUROPÄISCHE PATENTSCHRIFT

(11) **EP 1 038 507 B1**
(45) Veröffentlichungstag und Bekanntmachung des Hinweises auf die Patenterteilung: **14.06.2006**
(21) Anmeldenummer: 00102181.5
(22) Anmeldetag: 09.02.2000
(51) Int. Cl.: A61C 13/20

(54) **Verfahren zum Steuern eines Ofens**
Method of controlling a kiln
Procédé de contrôle d'un four

(30) Priorität: 26.03.1999 DE 19913891
(43) Veröffentlichungstag der Anmeldung: 27.09.2000
(73) Patentinhaber: Ivoclar Vivadent AG, 9494 Schaan (LI)
(72) Erfinder: Foser, Hans Peter, 9496 Balzers (LI); Höland, Wolfram, Dr., 9494 Schaan (LI); Lorünser, Johannes, 6700 Bludenz (AT); Rohner, Gottfried, 9450 Altstätten (CH); Schweiger, Marcel, 7000 Chur (CH); Ulbricht, Horst, 9492 Eschen (LI)
(74) Vertreter: Baronetzky, Klaus

(56) Entgegenhaltungen:
- EP-A- 0 438 802
- EP-A- 0 626 165

## Beschreibung

Die Erfindung betrifft ein Verfahren zum Steuern eines Ofens für die Herstellung von Zahnersatzteilen gemäß dem Oberbegriff von Anspruch 1.

Ein derartiges Verfahren ist aus der EP-A1-438 802 bekannt. Bei diesem Verfahren wird ein Ofen für die Herstellung eines Zahnersatzteils in einer besonderen Weise angesteuert. Eine Antriebsvorrichtung drückt auf einen Kolben, der eine Dentalmasse unter Wärmeeinwirkung verformt und in einen Formraum preßt. Der Formraum entspricht einem Zahnersatzteil und die plastische Dentalmasse formt dieses Zahnersatzteil unter Aushärtung. Während es bei den früheren Techniken häufig zu Lufteinschlüssen kam, aber auch bei unterschiedlichen Geometrien der Zahnersatzteile Probleme entstanden, lehrte die genannte Druckschrift die Verbesserung, Bewegungsparameter des Kolbens zu erfassen und eine Änderung der Kolbenbewegungsgeschwindigkeit als Maßstab für das Abschalten des Ofens festzulegen.

Auch wenn durch diese Maßnahme die Qualität der Zahnersatzteile gegenüber den zuvor bekannten Lösungen deutlich verbessert werden konnte, wäre eine weitere Verbesserung gerade auch bei filigranen Zahnersatzteilen wünschenswert. Ein weiteres Problem besteht bei der Verwendung insbesondere von Lithium-Disilikat-Glaskeramiken. Dieses Material ist zwar im Grunde gut für die Herstellung von Zahnersatzteilen geeignet. Es reagiert jedoch bei hohen Temperaturen recht stark mit dem Einbettmaterial der Muffel. Um insofern dennoch eine gute Oberfläche des Zahnersatzteils zu erzielen, ist es bereits bekannt geworden, das fertiggestellte Zahnersatzteil über wässrige Flusssäure zu reinigen.

Dieses Verfahren ist jedoch aus zwei Gründen nicht erwünscht.

Zum einen erfordert die Handhabung von wässrige Flusssäure besondere Schutzmaßnahmen, nachdem wässrige Flusssäure sehr ätzend ist. In diesem Zusammenhang ist auch das Entsorgungsproblem relevant, denn eine Regeneration unmittelbar im Dentallabor wäre zu aufwendig.

Zum anderen wird durch das Anätzen durch die wässrige Flusssäure ein geringer Materialabtrag vorgenommen, so daß das geätzte Zahnersatzteil etwas geringere Abmessungen als das ungeätzte Zahnersatzteil aufweist.

Ferner ist es seit längerem bekannt, Dentalöfen über vorgegebene Programme zu steuern. Bei derartigen Steuerverfahren können eine Vielzahl von Parametern vorgegeben werden, wobei beispielsweise auch der Komplexität des Zahnersatzteils Rechnung getragen werden kann. Die Steuerung betrifft jedoch insbesondere die Art der Aufheizung, und es wird die Theorie vertreten, daß die Aufheizkurve maßgeblich zur Qualität des erzeugten Zahnersatzteils beiträgt.

Ferner ist es bereits vorgeschlagen worden, den Druck oder die Kraft, die auf das Zahnersatzteil wirkt, beim Beginn des Preßvorgangs kontinuierlich zunehmen zu lassen. Diese Maßnahme für sich allein genommen führt jedoch bei voluminösen Zahnersatzteilen lediglich zu einer Verlängerung der notwendigen Preßzeit.

Es ist bekannt, daß eine Temperaturerhöhung des Restaurationsmaterials während des Pressens die Presszeit verkürzen kann. Dies wirkt sich jedoch negativ auf die Oberfläche und die physikalischen Eigenschaften des fertigen Zahnrestaurationsteiles aus. Ideal wäre deshalb eine niedrige Temperatur und eine möglichst kurze Preßzeit, wobei bei der praktischen Verwirklichung je nach Art des Dentalmaterials Kompromisse eingegangen werden müssen.

Daher liegt der Erfindung die Aufgabe zugrunde, ein Verfahren zum Steuern eines Ofens für die Herstellung von Zahnersatzteilen gemäß dem Oberbegriff von Anspruch 1 zu schaffen, das für unterschiedliche Arten von Zahnersatzteilen besser geeignet ist und insbesondere derart verbesserte Oberflächen der Zahnersatzteile erlaubt, daß die Verbindung ätzender Säuren zumindest reduziert oder ganz ausgeschlossen werden kann.

Diese Aufgabe wird erfindungsgemäß durch Anspruch 1 gelöst. Vorteilhafte Weiterbildungen ergeben sich aus den Unteransprüchen.

Im folgenden wird die Erfindung für ein Keramikmaterial, insbesondere für einen Rohling aus Keramik beschrieben. Erfindungsgemäß können aber auch Kunststoffe, Metalle und Legierungen in Form von Pulver oder Festkörpern eingesetzt werden.

Erfindungsgemäß besonders günstig ist es, daß sich mit den erfindungsgemässen Merkmalen Dentalersatzteile ergeben, die eine qualitativ hochwertige Oberfläche sowohl bei voluminösen Formen als auch bei filigranen Formen aufweisen. Erfindungsgemäß besonders vorteilhaft ist es, wenn eine Preßkurve eingesetzt wird, deren Preßkraft bevorzugt zunächst sanft ansteigt, dann einen ziemlich hohen Maximalwert erreicht, der gehalten wird, wobei die Reduktion der Eindringgeschwindigkeit des Kolbens und/oder die Druckerhöhung als unmittelbar wirkendes Abschaltsignal herangezogen wird. Überraschend ergibt sich durch die ziemlich starke Pressung auch ein recht schnelles Eindringen des Dentalmaterials in feingliedrige Preßkanäle und in die Preßform, so daß sich erfindungsgemäß beispielsweise auch ohne weiteres drei- und mehrgliedrige Brücken im filigranen Frontzahnbereich des Unterkiefers pressen lassen. Soweit die erfaßten Parameter anzeigen, daß der Füllvorgang beendet ist, wird der Motor abgeschaltet. Je nach Art des Zahnersatzteils kann auch noch eine Verweilzeit eingesetzt werden, die aber ebenfalls so kurz wie möglich bemessen ist, und unmittelbar anschließend wird die Ofenhaube entfernt, so daß die Entnahme zum Abkühlungsprozeß stattfinden kann.

Gemäß einer besonders günstigen Ausgestaltung der Erfindung ist es vorgesehen, die Ofenhaube automatisch zu entfernen. Dies kann in verschiedener geeigneter Weise erfolgen, wobei es bevorzugt ist, die Ofenhaube anzuheben und dann die Muffel aus dem Preßbereich wegzuschwenken, so daß sie auf einer Abstellfläche abkühlen kann und bei Bedarf umgehend bereits die nächste Muffel mit den nächsten vorbereiteten Zahnersatzteilen gepreßt werden kann.

Erfindungsgemäß besonders günstig ist es, daß die Reaktionszeit zwischen den ggf. feingliedrigen Zahnersatzteilen und der Einbettmasse so kurz wie möglich gehalten werden kann. Damit lassen sich in erfindungsgemäß überraschend vorteilhafter Weise auch für die Hochtemperaturverarbeitung geeignete Einbettmassen, beispielsweise phosphatgebundene Einbettmassen auch für neue Dentalkeramiken, wie beispielsweise Lithium-Disilikat-Glaskeramiken, verwenden.

Gemäß einem weiteren, besonders günstigen Gesichtspunkt läßt sich das Entstehen von Luftpolstern erfindungsgemäß nahezu vollständig vermeiden. Luftpolster lassen sich erfindungsgemäß vermeiden, indem die Preßkraft bei filigranen Zahnersatzteilen anfangs reduziert wird, oder wenn voluminöse Zahnersatzteile zu rasch gefüllt werden, als daß es zur Bläschenbildung kommt.

Erfindungsgemäß besonders günstig ist es ferner, daß auch die Reaktion der Einbettmasse mit der Keramik während des temperaturabhängigen viskosen Fließvorgangs soweit wie möglich vermieden wird. Durch die zeitliche Minimierung des Preßvorganges findet höchstens eine ganz kurzzeitige Reaktion statt, während aufgrund der vergleichsweise hohen Fließgeschwindigkeit das Dentalmaterial rasch an den Zielort gelangt, an welchem es statisch verbleibt, so daß die etwaige Reaktion und ggf. die Beeinflussung der Viskosität keine weiteren Auswirkungen auf den Fließvorgang haben kann.

Gemäß einem besonders günstigen Gesichtspunkt ist es erfindungsgemäß sichergestellt, daß ein Bersten der Einbettmasse bzw. der Muffel vermieden wird. Indem die Preßkurve an die Art des verwendeten Dentalmaterials angepaßt wird, wird ein Überpressen verhindert, wobei die definierte Steuerung dazu beiträgt, Kraftspitzen, die ein Bersten der Muffel auslösen könnten, zu verhindern.

Mit dem erfindungsgemäßen Verfahren läßt sich die Zykluszeit für die Herstellung eines Zahnersatzteils reduzieren, und die im Zusammenhang mit der Erfindung vorgenommenen Versuche haben ergeben, daß die Ausschußrate deutlich geringer ist.

Weitere Einzelheiten, Vorteile und Merkmale ergeben sich aus der nachfolgenden Beschreibung dreier Ausführungsbeispiele.

Bei einem ersten Ausführungsbeispiel wurden maßstäbliche 1:1-Modelle in Wachs oder einem thermoplastischen Kunststoff hergestellt. Diese wurden auf eine Muffelbasis mittels eines runden Wachsdrahts mit einem Durchmesser von zwei bis drei Millimetern angestiftet, so daß die Wachsdrähte als spätere Angußkanäle dienen konnten. Die Muffelbasis umgebend wurde eine Papiermanschette aufgestellt, so daß eine nach oben offene zylindrische Preßform entstand. Die Papiermanschette wurde anschließend mit einer gießfähigen Einbettmasse ausgegossen. Es wurde darauf geachtet, daß die Einbettmasse keine Lufteinschlüsse an den Wachs- oder Thermoplastmodellen ließ. Die Wachs- oder Thermoplastmodelle waren - abgesehen von den Enden der Angußkanälen - vollständig von Gießmasse umschlossen.

Die Aushärtzeit für die Einbettmasse betrug bei dem beschriebenen Ausführungsbeispiel eine Stunde. Anschließend hieran ließen sich die Muffelbasis und die Papiermanschette leicht von der erstarrten Gießmasse lösen.

Bei diesem Ausführungsbeispiel wurde zur Verfestigung der Einbettmasse, die als Preßform dienen sollte, aber auch, um das Wachs bzw. den thermoplastischen Kunststoff ausbrennen zu lassen, die Preßform mittels Vorwärmeofen einem Temperatur-Zeit-Zyklus unterworfen. Im Rahmen dieses Zyklus wurde die Muffel auf 250 Grad C aufgeheizt, und zwar mit einer Erwärmungsgeschwindigkeit von weniger als 10 Grad C pro Minute und die Ofentemperatur wurde für dreißig Minuten stand by gehalten.

Anschließend hieran wurde die Preßform im Vorwärmeofen mit einem Temperaturgradienten von 10 Grad C pro Minute auf 850 Grad C aufgeheizt, und diese Temperatur wurde für neunzig Minuten gehalten.

Damit war die Preßformherstellung abgeschlossen.

Für das erfindungsgemäße Pressen wurde die noch heisse Preßform in den erfindungsgemäßen Ofen überführt, der bereits auf 700 Grad C vorgewärmt war. Die Preßform wurde mit einem Rohling des zu verarbeitenden glaskeramischen Materials und einem zusätzlichen Kraftübertragungszylinder aus Aluminiumoxid bestückt. Als glaskeramisches Material wurde IPS Empress 2 der Firma Ivoclar AG verwendet. Der erfindungsgemäße Heißpreßofen wurde - zunächst ohne Preßkraft aber unter Vakuum - mit einem Temperaturgradienten von 60 °C pro Minute auf 920 °C hocherhitzt, wobei diese Temperatur für zwanzig Minuten konstant gehalten wurde. Anschließend hieran wurde die Preßkraft aufgebracht, die zum viskosen Fließen und zur Realisierung des Formgebungsprozesses führt.

Beim ersten Ausführungsbeispiel wurden drei quaderförmige Stäbe mit den Abmessungen 1,5 mm x 4,0 mm x 20 mm in einer Preßform hergestellt. Der Preßdruck wurde bei diesem Ausführungsbeispiel ohne Verzögerung gebracht, wobei die Preßkraft, die durch den elektrischen Motor erzeugt und mit einem Kraftfühler gemessen wurde, konstant bei 250 N gehalten wurde. Das Ende des Formfüllvorgangs wurde mit einer Weg-Zeit-Messung erfaßt. Sobald der Preßkolben einen Weg von weniger als 0,3 mm innerhalb von drei Minuten zurückgelegt hatte, wurde der Ablauf der Preßzeit angezeigt. Unmittelbar anschließend wurde die Preßform manuell aus dem Ofen entnommen und an der Luft abgekühlt. In an sich bekannter Weise wurden die Preßobjekte mittels Sandstrahlen entformt, wobei die Preßform zerstört wurde.

Die so erhaltenen Preßlinge wurden einer Festigkeitsprüfung mittels Dreipunkt-Biegeprüfung nach ISO 6872 unterzogen. Der rmittelte Festigkeitswert betrug 373 ± 44 MPa.

Im Rahmen eines vergleichshalber, unabhängig von der Erfindung realisierten zweiten Ausführungsbeispiels wurde nach dem Abschluß des Temperaturhaltevorgangs auf 920 Grad, wie es im Zusammenhang mit dem ersten Ausführungsbeispiels beschrieben wurde, der Preßzyklus dahingehend modifiziert, daß der Kraftaufbau manuell erfolgte. Dieses Verfahren eignet sich besonders, wenn sehr dünne Pressobjekte mit komplizierter Geometrie hergestellt werden müssen, z.B. dreigliedrige Brücken im Frontzahnbereich Unterkiefer. Der Kraftaufbau erfolgte in diesem Beispiel mit einer Zunahme von 2 N/s, beginnend bei einer Ausgangskraft von 50 N bis zur Endkraft von 250 N. Verpreßt wurden pro Preßform erneut drei quaderförmige Stäbe, mit den vorstehend genannten Maßen.

Der ermittelte Festigkeitswert nach ISO 6872 betrug 371 ± 33 MPa. Im Vergleich z.B. ohne verzögerten Kraftaufbau ergibt sich dementsprechend der Nachweis, daß die Verzögerung keinen nachteiligen Einfluß auf die Festigkeit bei der Verwendung von Empress 2 als Dentalmaterial hat.

Im Rahmen des dritten Ausführungsbeispiels wurde mit den gleichen Parametern wie beim zweiten Beispiel gearbeitet. Das Kriterium für den Ablauf der Preßzeit wurde jedoch modifiziert. Bei den beiden erstgenannten Beispielen wurde als Endekriterium ein Preßweg von 0,3 mm pro drei Minuten verwendet, und beim dritten Ausführungsbeispiel wurde dieses Endekriterium modifiziert in 0,3 mm Preßweg in einer Minute. Diese Reduktion der Preßzeit hat erfindungsgemäß den besonderen Vorteil, daß das glaskeramische Material Empress 2 nicht mehr so lange in heissem Zustand mit der Preßform in Kontakt ist, so daß sich von der Theorie her geringere Reaktionen ergeben müßten.

Tatsächlich zeigte eine rasterelektronenmikroskopische Untersuchung eine deutliche Abnahme der Schichtstärke der Reaktionsschicht zwischen dem Dentalmaterial und dem Preßformmaterial. Andererseits wirkte sich bereits bei diesem Ausführungsbeispiel der verkürzte Preßzyklus nicht negativ auf die Festigkeit des Materials aus. Überraschend ergab sich sogar eine erhöhte Punktbiegefestigkeit von 405 ± 40 MPa. Es wird vermutet, daß die bei den ersten und zweiten Ausführungsbeispielen dickere Reaktionsschicht das Dentalmaterial auch schwächt, was die erfindungsgemäße Verbesserung der Festigkeit erklären würde. Zudem war die Oberflächenbeschaffenheit aufgrund der dünneren Reaktionsschicht besser.

Bei einem vierter Ausführungsbeispiel wurde eine dreigliedrige Brücke hergestellt. Die Preßform wurde in der gleichen Weise hergestellt, wie es bei dem ersten und zweiten Ausführungsbeispiel beschrieben ist. Ein Preßkanal wird an die Brücke angeformt.

Nach Entnahme der Muffel aus dem Vorwärmofen und Einsetzen in den auf 700 Grad C vorgewärmten Preßofen wurde ein Preßrohling aus einer Lithiumdisilikat-Glaskeramik eingeführt und ein Aluminiumoxidzylinder zur Kraftübertragung eingesetzt. Die Aufheizung wurde mit einem Temperaturgradienten von 60 Grad C/Minute vorgenommen, bis auf eine Temperatur von 920 Grad C erreicht wurde. Diese Temperatur wurde für 20 Minuten konstant gehalten. Anschließend wurde eine Preßkraft von 100 N für 20 Sekunden aufgebracht. Danach wurde die Preßkraft kontinuierlich auf 250 N erhöht, und nach 3 Minuten beendete der Preßofen die Pressung.

Die Muffel wurde entnommen, abgekühlt und die Brücke von der Formmasse, also der Einbettmasse, getrennt. Die Oberfläche der Brücke war bedeutend gleichmäßiger und schöner als bei einer Vergleichspressung mit einem Preßofen gemäß der EP-B1-438 801. Der Preßvorgang lief schneller ab, und auch die Passung der Brücke im Randbereich war deutlich besser. Die Reaktionsphase zwischen Einbettmasse und Keramik konnte entscheidend verkürzt werden, was in einer verminderten Schichtstärke der Reaktionszeit zum Ausdruck kam. Die Brücke wurde für 10 Minuten mit wässriger Flusssäure im Ultraschallbad behandelt und danach in üblicher Weise fertiggestellt.

## Patentansprüche

1. Verfahren zum Steuern eines Ofens für die Herstellung von Zahnersatzteilen, wobei ein elektrischer Motor einen Kolben bewegt, der auf ein verformbares Restaurationsmaterial wirkt, das in einen Muffelofen mit einer von der Muffel entfernbaren Ofenhaube eingebracht wurde, wobei die Reduktion der Eindringgeschwindigkeit des Kolbens und/oder die Druckerhöhung als Abschaltkriterium für den Pressvorgang herangezogen wird,
**dadurch gekennzeichnet, dass** je nach Art des verwendeten Dentalmaterials eine Presskurve festgelegt wird, wobei die durch den elektrischen Motor erzeugte Presskraft nach Erreichen eines vorgegebenen Maximalwertes konstant gehalten wird, und wobei der Motor abgeschaltet und die Ofenhaube entfernt wird, sobald die erfassten Abschaltkriterien das Beenden des Füllvorganges anzeigen.

2. Verfahren nach Anspruch 1,
**dadurch gekennzeichnet, dass** die Presskurve beim Beginn der Plastifizierung ansteigend verläuft und die End-Presskraft mehr als 200 N, insbesondere maximal 300 N beträgt.

3. Verfahren nach einem der Ansprüche 1 oder 2,
**dadurch gekennzeichnet, dass** die Muffel mit dem als Rohling vorliegenden Zahnersatzteil vorgewärmt und in dem Muffelofen bei Unerdruck auf eine vorgegebene Temperatur erhitzt wird, wobei die Temperatur innerhalb einer vorgegebenen Zeitdauer konstant gehalten wird und anschließend hieran die Presskraft aufgebracht wird, um den Formgebungsprozess zu realisieren.

4. Verfahren nach einem der vorhergehenden Ansprüche,
**dadurch gekennzeichnet, dass** die Presskraft ohne Verzögerung den vorgegebenen Maximalwert von vorzugsweise 250 N erreicht.

5. Verfahren nach einem der Ansprüche 1 bis 3,
**dadurch gekennzeichnet, dass** eine Presskraft von 100 N aufgebracht wird, die dann kontinuierlich auf vorzugsweise 250 N erhöht und während einer vorgegebenen Zeit konstant gehalten wird.

6. Verfahren nach Anspruch 1,
**dadurch gekennzeichnet, dass** das Ende der Presskraft bei einem Pressweg von weniger als 0,5, insbesondere 0,1 mm innerhalb von weniger als zwei Minuten, insbesondere etwa einer Minute, erfasst wird.

7. Verfahren nach einem der vorhergehenden Ansprüche,
**dadurch gekennzeichnet, dass** vor Beginn des Pressvorgangs, insbesondere an einem Positivmodell des Zahnersatzteils, die Größe des herzustellenden Zahnersatzteils einerseits und die Dicke der dünnsten Presskanäle innerhalb des Zahnersatzteils andererseits bestimmt wird und in Abhängigkeit von den festgestellten Werten die Presskurve eingestellt wird.

8. Verfahren nach einem der vorhergehenden Ansprüche,
**dadurch gekennzeichnet, dass** der elektrische Motor die Presskraft auf einen Wert beschränkt, der unterhalb der Verformungskraft liegt, wobei die Verformungskraft materialspezifisch in Abhängigkeit von dem Material der Zahnersatzteile einstellbar ist.

9. Verfahren nach einem der vorhergehenden Ansprüche,
**dadurch gekennzeichnet, dass** ein Kraftsensor vorgesehen ist, der die Presskraft misst, die der elektrische Motor über den Kolben auf das Dentalmaterial aufbringt, und dass der elektrische Motor über eine Steuervorrichtung von dem Kraftsensor gesteuert wird.

10. Verfahren nach einem der vorhergehenden Ansprüche,
**dadurch gekennzeichnet, dass** zusätzlich zur Presskraft der von dem Kolben zurückgelegte Weg erfasst wird und die Presskurve nach vorgegebenen Parametern in Abhängigkeit von der Wahl des Dentalmaterials und von der Geometrie des Zahnersatzteils weg- und zeitgesteuert realisiert wird.

11. Verfahren nach einem der vorhergehenden Ansprüche,
**dadurch gekennzeichnet, dass** als elektrischer Motor ein Schrittmotor verwendet wird und dass der Kraftsensor die Zunahme der Kraft bei jedem Schritt des Schrittmotors erfasst und die Erhöhung der Presskraft als Abschaltkriterium verwendet.

12. Verfahren nach einem der vorhergehenden Ansprüche,
**dadurch gekennzeichnet, dass** die Ofenhaube mit einem Hub- und/oder Schwenkmechanismus ausgerüstet ist und insbesondere beim Ablauf der Presszeit, ggf. nach einer Verweilzeit, die Ofenhaube automatisch hoch- und/oder weggeschwenkt wird.

13. Verfahren nach einem der vorhergehenden Ansprüche,
**dadurch gekennzeichnet, dass** die Ofenhaube nach einer Verweilzeit nach Ablauf der Presszeit entfernt wird.

14. Verfahren nach einem der vorhergehenden Ansprüche,
**dadurch gekennzeichnet, dass** als verformbares Restaurationsmaterial an sich bekannte, im Wesentlichen zylindrische vorgefertigte Rohlinge verwendet werden.

15. Verfahren nach einem der vorhergehenden Ansprüche,
**dadurch gekennzeichnet, dass** die Presskurve an das zu verpressende Material, beispielsweise die Glaskeramik, optimal angepasst ist, wobei eine maximale Presskraft so eingestellt ist, dass sie mit einem Sicherheitsabstand unterhalb der Presskraft liegt, die zum Bruch oder zum Platzen der Einbettmassenmuffel führen würde.

## Claims

1. A method of controlling a kiln for the production of dental replacement parts, wherein an electric motor moves a piston which acts on a deformable restoration material which has been introduced into a muffle kiln having a kiln hood which can be removed from the muffle, wherein the reduction of the entry speed of the piston and/or the pressure increase is used as a switching-off criterion for the compressing process,
**characterised in that**, depending on the type of dental material used, a compression curve is established, wherein the compressing force generated by the electric motor is maintained constant after reaching a predetermined maximum value, and wherein the motor is switched off and the kiln hood is removed as soon as the detected switching-off criteria indicate the termination of the filling process.

2. A method according to Claim 1, **characterised in that** the compression curve extends in ascending manner at the beginning of plasticising and the final compressing force is more than 200 N, in particular at maximum 300 N.

3. A method according to either Claim 1 or Claim 2, **characterised in that** the muffle is preheated with the dental replacement part present as a blank and is heated to a predetermined temperature in the muffle kiln at underpressure, wherein the temperature is maintained constant within a predetermined period and, subsequent thereto, the compressing force is applied so as to carry out the shaping process.

4. A method according to any one of the preceding Claims, **characterised in that** the compressing force attains without delay the preset maximum value of preferably 250 N.

5. A method according to any one of Claims 1 to 3, **characterised in that** a compressing force of 100 N is applied, which is then increased continuously preferably to 250 N and is maintained constant for a predetermined time.

6. A method according to Claim 1, **characterised in that** the end of the compressing force with a compressing travel of less than 0.5, in particular 0.1 mm, is detected within less than two minutes, in particular approximately one minute.

7. A method according to any one of the preceding Claims, **characterised in that** before the beginning of the compressing process, in particular on a positive model of the dental replacement part, the size of the dental replacement part to be produced, on the one hand, is determined and the thickness of the thinnest compressing channels within the dental replacement part, on the other hand, is determined, and the compressing curve is adjusted depending on the values ascertained.

8. A method according to any one of the preceding Claims, **characterised in that** the electric motor limits the compressing force to a value which is below the deforming force, wherein the deforming force can be adjusted material-specifically depending on the material of the dental replacement parts.

9. A method according to any one of the preceding Claims, **characterised in that** a force sensor is provided, which measures the compressing force which the electric motor applies to the dental material via the piston, and **in that** the electric motor is controlled by the force sensor via a control device.

10. A method according to any one of the preceding Claims, **characterised in that** in addition to the compressing force the distance travelled by the piston is detected and the compressing curve is established in a distance and time-controlled manner in accordance with predetermined parameters depending on the choice of dental material and on the geometry of the dental replacement part.

11. A method according to any one of the preceding Claims, **characterised in that** a stepping motor is used as electric motor, and **in that** the force sensor detects the increase in the force at each step of the stepping motor and uses the increasing in the compressing force as a switching-off criterion.

12. A method according to any one of the preceding Claims, **characterised in that** the kiln hood is provided with raising and/or pivoting mechanism and, in particular, upon expiry of the compressing time, optionally after a residence time, the kiln hood is automatically pivoted up and/or pivoted away.

13. A method according to any one of the preceding Claims, **characterised in that** the kiln hood is removed after a residence time upon expiry of the compressing time.

14. A method according to any one of the preceding Claims, **characterised in that** as deformable restoration material there are used per se known, substantially cylindrical prefabricated blanks.

15. A method according to any one of the preceding Claims, **characterised in that** the compressing curve is matched optimally to the material to be moulded, for example a glass ceramic, wherein a maximum compressing force is adjusted so that it is safely below the compressing force which would result in fracture or rupture of the embedding material muffle.

## Revendications

1. Procédé de commande d'un four pour la fabrication de prothèses dentaires, dans lequel un moteur électrique déplace un piston qui agit sur un matériau de restauration déformable qui a été introduit dans un four à moufle comprenant un capot de four pouvant être retiré de la moufle, la réduction de la vitesse d'enfoncement du piston et/ou l'augmentation de la pression étant utilisée en tant que critère de désactivation pour le processus de pression,
**caractérisé en ce que**
selon le type de matériau dentaire utilisé, on détermine une courbe de pression, la force de pression générée par le moteur électrique étant maintenue constante une fois une valeur maximale prédéterminée atteinte, et le moteur étant désactivé et le capot du four retiré dès que les critères de désactivation enregistrés indiquent la fin du processus du remplissage.

2. Procédé selon la revendication 1, **caractérisé en ce que** la courbe de pression est croissante au début de la plastification et la force de pression finale s'élève à plus de 200 N, en particulier à 300 N au maximum.

3. Procédé selon l'une des revendications 1 ou 2, **caractérisé en ce que** la moufle est préchauffée avec la pièce de rechange dentaire disponible en tant que pièce brute et est chauffée dans le four à moufle sous vide à une température prédéterminée, la température étant maintenue constante à l'intérieur d'une période prédéterminée et la force de pression étant ensuite exercée afin de réaliser le processus de formage.

4. Procédé selon l'une des revendications précédentes, **caractérisé en ce que** la force de pression atteint sans retard la valeur maximale prédéterminée de préférence égale à 250 N.

5. Procédé selon l'une des revendications 1 à 3, **caractérisé en ce qu'**une force de pression de 100 N est exercée, augmentant ensuite de manière continue jusqu'à de préférence 250 N et est maintenue constante pendant un temps prédéterminé.

6. Procédé selon la revendication 1, **caractérisé en ce que** la fin de la force de pression est enregistrée pour une course de pression inférieure à 0,5 mm, en particulier égale à 0,1 mm, dans une période de moins de deux minutes, en particulier d'environ une minute.

7. Procédé selon l'une des revendications précédentes, **caractérisé en ce qu'**avant le début du processus de pression, en particulier au niveau d'un modèle positif de la pièce de rechange dentaire, on détermine la taille de la pièce de rechange dentaire à fabriquer d'une part et l'épaisseur des canaux de pression les plus minces à l'intérieur de la pièce de rechange dentaire d'autre part, et la courbe de pression est réglée en fonction des valeurs déterminées.

8. Procédé selon l'une des revendications précédentes, **caractérisé en ce que** le moteur électrique limite la force de pression à une valeur inférieure à la force de déformation, la force de déformation pouvant être réglée de manière spécifique aux matériaux en fonction du matériau des pièces de rechange dentaires.

9. Procédé selon l'une des revendications précédentes, **caractérisé en ce qu'**il est prévu un capteur de force qui mesure la force de pression exercée par le moteur électrique via le piston sur le matériau dentaire, et le moteur électrique est commandé via un dispositif de commande par le capteur de force.

10. Procédé selon l'une des revendications précédentes, **caractérisé en ce qu'**en plus de la force de pression, la course parcourue par le piston est enregistrée et la courbe de pression est réalisée en fonction de la course et du temps, selon des paramètres prédéterminés en fonction du choix du matériau dentaire et de la géométrie de la prothèse dentaire.

11. Procédé selon l'une des revendications précédentes, **caractérisé en ce que** l'on utilise en tant que moteur électrique un moteur pas-à-pas et le capteur de force enregistre l'augmentation de la force à chaque pas du moteur pas-à-pas et utilise l'augmentation de la force de pression en tant que critère de désactivation.

12. Procédé selon l'une des revendications précédentes, **caractérisé en ce que** le capot du four est équipé d'un mécanisme de levage et/ou de pivotement et en particulier une fois le temps de pression écoulé, le cas échéant après un temps d'attente, le capot du four est automatiquement pivoté vers le haut et/ou vers l'extérieur.

13. Procédé selon l'une des revendications précédentes, **caractérisé en ce que** le capot du four est retiré après un temps d'attente suite à l'écoulement du temps de pression.

14. Procédé selon l'une des revendications précédentes, **caractérisé en ce que** l'on utilise en tant que matériau de restauration déformable des pièces brutes préfabriquées pour l'essentiel cylindriques, connues en soi.

15. Procédé selon l'une des revendications précédentes, **caractérisé en ce que** la courbe de pression est adaptée de façon optimale au matériau à compresser, par exemple la vitrocéramique, une force de pression maximale étant réglée de manière à être inférieure, avec un écart de sécurité, à la force de pression qui conduirait à la rupture ou à l'éclatement de la moufle de masse d'empreinte.
